# EUROPEAN PATENT SPECIFICATION

(11) **EP 3 263 665 B1**
(45) Date of publication and mention of the grant of the patent: **15.05.2019**
(21) Application number: 16177176.1
(22) Date of filing: 30.06.2016
(51) Int. Cl.: C09D 183/04, C09D 183/06, C09D 183/08, C08G 77/14, C08G 77/24, C08K 3/22

(54) **FLUORINE-BASED PROTECTIVE COATING COMPOSITION FOR CHROMIUM SURFACES**
FLUORBASIERTE SCHUTZBESCHICHTUNGSZUSAMMENSETZUNG FÜR CHROMOBERFLÄCHEN
COMPOSITION DE REVÊTEMENT DE PROTECTION À BASE DE FLUOR POUR SURFACES DE CHROME

(43) Date of publication of application: 03.01.2018
(73) Proprietor: 3M Innovative Properties Company, Saint Paul, MN 55133-3427 (US)
(72) Inventor: Schuell, Christoph, 41453 Neuss (DE); Strerath, Christiane, 41453 Neuss (DE); Audenaert, Frans, B-2070 Zwijndrecht (BE); Doelen, Leonardus, 41453 Neuss (DE); Naiyong, Jing, St. Paul, MN 55144 (US)
(74) Representative: Gabriel, Kiroubagaranne

(56) References cited:
- EP-A2- 1 033 395
- WO-A1-2015/026652
- WO-A1-2016/032738
- US-A1- 2012 204 762

## Description

### Technical Field

The present disclosure relates generally to the field of protective coatings for metallic surfaces, more specifically to the field of protective coating compositions for chromium surfaces. The present disclosure also relates to a method of treating a chromium surface.

### Background

Metallic materials such as iron, steel, aluminum and zinc are widely used in the fields of transportation, aeronautics and astronautics, energy, electronics, architecture, upholstery, household electrical appliances, etc. In particular, stainless steel is ubiquitous in commercial kitchens, home kitchens, office buildings, airports, and various other public spaces. Most metals are susceptible to corrosion when exposed to humid air and corrosive liquids. Such corrosion may severely affect the quality of the metals and the products made of the metals. Accordingly, various methods for the passivation of metal surfaces to provide corrosion protection properties to such materials have been developed. Exemplary methods for providing corrosion protection to metallic surfaces are described e.g. in US 2005/0163933A1 (Dietsche et al.), US 2007/0240792A1 (Witteler et al.), in WO 2015026652 (Yin et al.) and in US 2012/0053104A1 (Olson et al.). The disclosed methods typically make use of coating compositions comprising a water-soluble polymer, such as e.g. a polyacrylate. Other surface treating agents using fluorinated compounds are described e.g. in EP-A1-1389634 (Satoh et al.) and in EP-A2-1300433 (Yamaguchi et al.).

Document WO-A-2016/032738 describes coating compositions comprising a perfluoropolyether silane, a tetrafunctional silane and an acid which are applied on chromium surfaces and are used to provide coatings with good oil and stain repellancy.

Document US-A-2012/204762 is directed to coating compositions used to provide corrosion protection of metal surfaces such as chromatised metal surfaces. The composition comprises a product resulting from hydrolysis and condensation of an aminoalkylalkoxysilane and optionally a fluoroalkylalkoxysilane or a tetraalkoxysilane, an acid, water, an organic solvent and a metal salt such as Cr³⁺ nitrate salt.

Finally, document US-B-6 361 871 refers to a coating composition for coating metal substrates comprising a perfluoro siloxane, a silane such as a tetra-alkoxysilane, an acid and SnCl₂ as multivalent metal salt. The coating compositions are used to provide heat, water, acid resistance and improved adhesion.

In contrast, protective coating compositions for alternative metallic surfaces such as those comprising essentially chromium are not widely described in the art. Chromium-containing metallic surfaces may though be encountered in a large variety of articles including those present in home or commercial kitchens, in decorative household appliances, in restrooms, in bathrooms, in automotive vehicles, or in consumer electronics.

Chromium surfaces are particularly sensitive to oily contaminants such as fingerprints, stains or marks originating from oily of fat components. Fingerprints or other oily contamination present on chrome surfaces not only detrimentally affect their aesthetic appearance, but may also attract additional dirt such as lint or dust. The ability to remove or clean oily contamination from chromium-containing surfaces is particularly challenging mainly owing to their particular surface anchoring chemistry. Also, when used in decorative items, the maintaining of the optics and/or haptics of the protective surface treated surface is particularly challenging for chromium surfaces, in particular rough chromium surfaces as encountered in automotive interiors.

A partial solution is described in WO 2007077136 (Schottner), which discloses a protective coating composition comprising a triazine ring containing silane resin allegedly providing a unique combination of properties.

Without contesting the technical advantages associated with the protective coating compositions known in the art for alternative metallic surfaces, there is still a need for a protective coating composition providing excellent easy-to-clean properties towards oily contamination present on chromium surfaces. Other advantages of the coating compositions and methods of the disclosure will be apparent from the following description.

### Summary

According to one aspect, the present disclosure relates to a method of reducing oily contamination from a chromium surface, which comprises the steps of:
a) providing a chromium surface;
b) applying a coating composition as described above to the chromium surface thereby forming a layer of the coating composition adjacent to the chromium surface; and
c) drying and/or curing the layer of the coating composition thereby forming a coating layer adjacent to the chromium surface, wherein the coating composition comprises:
   a) a silane compound comprising a perfluoropolyether group;
   b) a tetrafunctional silane;
   c) a multivalent metal salt;
   d) an acid and
   e) a solvent comprising water and optionally, an organic solvent.

According to another aspect, the present disclosure is directed to a coated article comprising a chromium surface and a coating layer adjacent to the chromium surface, wherein the coating layer comprises a layer of the coating composition as described above which has been dried and/or cured onto the chromium surface.

In yet another aspect, the present disclosure relates to the use of a protective coating composition as described above for reducing oily contamination from a chromium surface.

### Detailed description

A protective coating composition for reducing oily contamination from a chromium surface comprises:
a) a silane compound comprising a perfluoropolyether group;
b) a tetrafunctional silane;
c) a multivalent metal salt;
d) an acid; and
e) a solvent comprising water and optionally, an organic solvent.

In the context of the present disclosure, it has been surprisingly found that a coating composition as described above provides excellent easy-to-clean properties towards oily contamination - in particular fingerprints - present on chromium surfaces, in combination with excellent durability.

Without wishing to be bound by theory, it is believed that this excellent combination of properties is due in particular to the combined presence of a silane compound comprising a perfluoropolyether group, a tetrafunctional silane, and a multivalent metal salt. The presence of the acidified solvent comprising water and optionally, an organic solvent, is also believed to play a crucial role in achieving these beneficial properties.

The very specific combination of functional compounds as described above, when present on the treated surface, is believed to provide advantageous surface anchoring with the chromium surface which translates into excellent adhesion to chromium surfaces. The very same combination of functional compounds provides the treated chromium surface with hydrophobic and oleophobic properties particularly beneficial for the removal of an oily contamination, in particular with simple wiping. As such, the coating compositions of the disclosure provide in particular outstanding fingerprint removal properties.

Advantageously, the protective coating composition of the present disclosure result in protective coatings provided with excellent and prolonged mechanical durability. Advantageously still, the protective coating as described herein are typically nanometer-thin and optically clear, which allows maintaining the optics and/or haptics of the to-be-treated chromium surface, even chromium surfaces having various roughness characteristics. The specific combination of thin coating and excellent durability is unexpected as generally high durability goes hand-in-hand with thick protective coatings.

The protective coating compositions of the present disclosure are water-based compositions having therefore advantageous low flammability characteristics, and which beneficially do not require the use of fluorinated (co)solvents.

From an application process perspective, the protective coating compositions as described herein are easy to apply according to cost-effective coating processes. Advantageously still, the coating compositions of the present disclosure do not require high temperature or actinic radiations-based curing steps, as the curing step is typically performed at temperatures below 100°C, or even below 90°C.

In the context of the present disclosure, the expression "chromium surface" is meant to designate a metallic surface having a chromium content of at least 50wt%, based on the weight of the metallic surface.

The coating composition of the present disclosure is outstandingly suitable for reducing oily contamination, in particular fingerprints, from a chromium surface. As such, the protective coating compositions of the present disclosure are particularly suited for imparting "easy-to-clean" or "easy removal" properties to a chromium surface, in particular cleaning or removal with dry- or wet-wiping. Advantageously, the protective coating compositions as described herein allow reducing or removing oily contamination without the need for aggressive scrubbing typically performed with chemical cleaners or detergents, which usually detrimentally affect the visual and aesthetic appearance of the treated surface.

The coating compositions of the present disclosure may find utility as protective coating for chromium-containing metallic surfaces encountered in a large variety of articles including those present in home or commercial kitchens (e.g., refrigerator, dishwasher, stove, oven, microwave, exhaust hoods, fryers, grease traps, food-preparation tables, cabinets, toasters), in decorative household appliances and lighting, in restrooms (e.g., toilet roll dispensers, toilet stall partitions, urinal partitions), in bathrooms, in automotive vehicles (exterior or interior car or motorcycle parts, such as e.g. alloy wheels, body parts, decorative or functional metallic panels, tanks, handlebars, wheel guards, mirror caps), or in consumer electronics (metal cases for mobile phones, tablets, and computers).

The coating compositions of the present disclosure provide excellent easy-to-clean properties with regard to oily contamination on a treated chromium surface not only to fresh oily contamination (immediate removal) but also to dried oily contamination (later removal).

Advantageously, the coating compositions of the present disclosure are able to provide excellent easy-to-clean properties with regard to oily contamination on chromium surfaces having various roughness characteristics, in particular on chromium surfaces having a roughness Ra comprised between 0.2 µm and 1.5 µm, in particular between 0.5 µm and 0.9 µm, when determined by confocal laser microscopy according to ISO 25178-6. Advantageously still, the coating compositions of the present disclosure are able to maintain the optics and/or haptics of the treated chromium surface on chromium surfaces having various roughness characteristics.

The protective coating composition of the present disclosure comprises, as a first technical feature, a silane compound comprising a perfluoropolyether group. Silane compounds comprising a perfluoropolyether group for use herein are not particularly limited. Any silane compounds comprising a perfluoropolyether group commonly known in the art may be used in the context of the present disclosure. Suitable silane compounds comprising a perfluoropolyether group for use herein will be easily identified by those skilled in the art, in the light of the present description.

In the context of the present disclosure, it has been discovered that the presence of a silane compound comprising a perfluoropolyether group in the protective coating compositions advantageously impacts the hydrophobic and oleophobic properties of the protective coating composition.

In a particular aspect of the present disclosure, the silane compound comprising a perfluoropolyether group for use herein has the following formula:

Rf{-X-[C(R¹)₂Si(Y)₃₋ₓ(R)ₓ]_{y}}_{z} **(I)**

wherein:
Rf is a polyfluoropolyether group;
X is a divalent or trivalent organic linking group;
each Y is independently halogen, alkoxy, hydroxyl, acyloxy, polyalkyleneoxy, or aryloxy;
R is an alkyl group having up to 8 carbon atoms or a phenyl group;
each R¹ is independently hydrogen or an alkyl having up to 4 carbon atoms;
x is 0 or 1 or 2;
y has a value from 1 to 8; and
z is 1 or 2.

In another particular aspect of the present disclosure, the silane compound comprising a perfluoropolyether group for use herein has the following formula:

Rf{Q-X'-[Si(Y)₃₋ₓ(R)ₓ]_{y}}_{z} **(II)**

wherein:
Q is a bond, -C(O)-N(R')-, -C(O)-O-, or -SO₂N(R')-, wherein R' is hydrogen or an alkyl having up to 4 carbon atoms; and
X' is a divalent or trivalent organic linking group comprising at least one of alkylene or arylalkylene, each of which is optionally interrupted by at least one functional group that is independently selected from the group of ether, thioether, sulfone, amine, ester, amide, carbamate, or urea.

According to an exemplary aspect of the silane compound comprising a perfluoropolyether group for use herein and described in any of formula (I) or (II), Y is an alkoxy group, and x is in particular 0.

According to another exemplary aspect of the silane compound comprising a perfluoropolyether group for use herein and described in formula (II), Q is -C(O)-N(R')-, and X' is a divalent or trivalent alkylene that is optionally interrupted by at least one functional group that is independently amine, ether, ester, carbamate, or urea.

In still another exemplary aspect of the silane compound comprising a perfluoropolyether group for use herein and described in formula (II), Q is -C(O)-N(R')-, and wherein X' is a divalent or trivalent alkylene that is optionally interrupted by at least one functional group that is amine.

In yet another exemplary aspect of the silane compound comprising a perfluoropolyether group for use herein and described in formula (II), Q is -C(O)-N(R')-, and X' is a divalent alkylene having up to 10 carbon atoms, in particular up to 8 carbon atoms.

In yet another exemplary aspect of the silane compound comprising a perfluoropolyether group for use herein and described in formula (II), Q is -C(O)-N(R')-, and X' is a divalent alkylene having between 2 and 10, between 2 and 8, or even between 2 and 6 carbon atoms.

According to still another exemplary aspect of the silane compound comprising a perfluoropolyether group for use herein and described in formula (II), R' is hydrogen, and X' is -(CH₂)₃-.

According to yet another exemplary aspect of the silane compound comprising a perfluoropolyether group for use herein and described in formula (II), Q is -C(O)-N(R')-, and X' is a divalent alkylene that is interrupted by at least one functional group that is amine, and the amine functional group is in particular selected from the group of secondary or tertiary amines, or even quaternary ammoniums.

According to yet another exemplary aspect of the silane compound comprising a perfluoropolyether group for use herein and described in formula (II), R' is hydrogen, and X' is -(CH₂)₃-N⁺(CH3)(CH3)-(CH₂)₃-.

According to one preferred aspect of the present disclosure, the silane compound comprising a perfluoropolyether group for use herein has the following formula:

Rf-C(O)-N(H)-(CH₂)₃-Si(Y)₃ **(III)**

According to another preferred aspect of the present disclosure, the silane compound comprising a perfluoropolyether group for use herein has the following formula:

Rf-C(O)-N(H)-(CH₂)₃-N⁺(CH₃)(CH₃)-(CH₂)₃-Si(Y)₃ **(IV)**

In an advantageous aspect of the silane compound comprising a perfluoropolyether group for use herein and described in any of formula (I) to (IV), Y is an alkoxy group, and the alkyl of the alkoxy group is selected from the group consisting of methyl, ethyl, n-propyl, isopropyl, n-butyl groups, and any combinations thereof.

In a preferred aspect of the silane compound comprising a perfluoropolyether group for use herein and described in any of formula (I) to (IV), Rf comprises perfluorinated repeating units comprising at least one of -(CₙF₂ₙO)-, -(CF(Z)O)-, -(CF(Z)CₙF₂ₙO)-, or-(CₙF₂ₙCF(Z)O)-; and Z is a perfluoroalkyl group or a perfluoroalkoxy group, each of which is optionally interrupted by at least one ether linkage, and n is an integer from 1 to 12.

In another preferred aspect of the silane compound comprising a perfluoropolyether group for use herein and described in any of formula (I) to (IV), Rf is -CF₂O(CF₂O)ₘ(C₂F₄O)_{b}CF₂-, -CF₂O(C₂F₄O)_{b}CF₂-, -(CF₂)₃O(C₄FsO)_{b}(CF₂)₃-, or -CF(CF₃)-(OCF₂CF(CF₃))_{b}O-Rf'-O(CF(CF₃)CF₂O)_{b}CF(CF₃)-, wherein Rf is a perfluoroalkylene group optionally interrupted in chain by at least one ether or amine linkage, m is 1 to 50, and b is 3 to 40.

In still another preferred aspect of the silane compound comprising a perfluoropolyether group for use herein and described in any of formula (I) to (IV), Rf is C₃F₇O(CF(CF₃)CF₂O)aCF(CF₃)-, C₃F₇O(CF₂CF₂CF₂O)ₐCF₂CF₂-, or CF₃O(C₂F₄O)aCF₂-, wherein radical a has an average value of 3 to 50.

In a typical aspect, the protective coating composition according to the present disclosure comprises a silane compound comprising a perfluoropolyether group in an amount of at least 0.01 wt%, at least 0.05 wt%, at least 0.1 wt%, at least 0.3 wt%, at least 0.5 wt%, or even at least 0.8 wt%, based on the weight of the overall coating composition.

In another typical aspect, the protective coating composition according to the present disclosure comprises a silane compound comprising a perfluoropolyether group in an amount of less than 10 wt%, less than 8 wt%, less than 6 wt%, less than 4 wt%, less than 2 wt%, or even less than 1 wt%, based on the weight of the overall coating composition.

According to a preferred aspect of the present disclosure, the protective coating composition comprises a silane compound comprising a perfluoropolyether group in an amount comprised between 0.01 wt% and 10 wt%, between 0.03 wt% and 8 wt%, between 0.05 wt% and 6 wt%, between 0.1 wt% and 5 wt%, between 0.3 wt% and 4 wt%, between 0.3 wt% and 3 wt%, between 0.3 wt% and 2 wt%, between 0.4 wt% and 2 wt%, between 0.5 wt% and 1 wt%, or even between 0.8 wt% and 1 wt%,based on the weight of the overall coating composition.

The protective coating composition of the present disclosure further comprises a tetrafunctional silane. Tetrafunctional silanes for use herein are not particularly limited. Any tetrafunctional silanes commonly known in the art may be used in the context of the present disclosure. Suitable tetrafunctional silanes for use herein will be easily identified by those skilled in the art, in the light of the present description.

In the context of the present disclosure, it has been discovered that protective coating compositions comprising a tetrafunctional silane, are provided with improved mechanical durability, when compared to similar coating compositions not comprising a tetrafunctional silane. Without wishing to be bound by theory, it is believed that the tetrafunctional silane present in the coating composition provides enhanced surface anchoring and mechanical durability, in particular by increasing the network density via suitable covalent bonds. The addition of a tetrafunctional silane to the protective coating composition has been found to be particularly beneficial for those compositions comprising both a silane compound comprising a perfluoropolyether group and a multivalent metal salt.

In a particular aspect of the present disclosure, the tetrafunctional silane for use herein is a tetrafunctional orthosilicate having preferably the following formula:

Si(W)₄ **(V)**

wherein:
W is an alkoxy group or a glycol ether group.

According to an exemplary aspect of the tetrafunctional silane for use herein and described in formula (V), W is an alkoxy group having up to 8 carbon atoms, up to 6 carbon atoms, or even up to 4 carbon atoms. Advantageously, the alkyl of the alkoxy group is selected from the group consisting of methyl, ethyl, n-propyl, isopropyl, n-butyl groups, and any combinations thereof.

According to another exemplary aspect of the tetrafunctional silane for use herein and described in formula (V), W is a dialkyleneglycol ether, in particular dipropyleneglycol monoalkylether, more in particular dipropyleneglycol monomethylether.

According to still another exemplary aspect of the tetrafunctional silane for use herein and described in formula (V), W is an alkyleneglycol ether, in particular 2-alkoxy ethanol, more in particular 2-butoxy ethanol.

The use of a tetrafunctional silane as described in formula (V), wherein W is an alkyleneglycol or a dialkyleneglycol ether, in particular dipropyleneglycol monoalkylether, more in particular dipropyleneglycol monomethylether, was found to be particularly advantageous for those protective coating compositions free of an optional organic solvent, owing in particular to the excellent solubility characteristics of these tetrafunctional silanes in water. Moreover, the hydrolysis of these specific tetrafunctional silanes generates glycol ethers having relatively high flashpoints, which further reduces the amount of flammable components in the protective coating compositions as described herein.

In a typical aspect, the protective coating composition according to the present disclosure comprises a tetra-functional silane in an amount comprised between 0.05 wt% and 10 wt%, between 0.08 wt% and 8 wt%, between 0.1 wt% and 8 wt%, between 0.2 wt% and 6 wt%, between 0.5 wt% and 6 wt%, between 0.6 wt% and 5 wt%, between 0.6 wt% and 4 wt%, between 0.6wt% and 3.0 wt%, or even between 0.6wt% and 2.5 wt%, based on the weight of the overall coating composition.

The protective coating composition of the present disclosure further comprises a multivalent metal salt. Multivalent metal salts for use herein are not particularly limited. Any multivalent metal salts commonly known in the art may be used in the context of the present disclosure. Suitable multivalent metal salts for use herein will be easily identified by those skilled in the art, in the light of the present description. Exemplary multivalent metal salts for use herein are described in US 2007/0240792A1 (Witteler et al.).

In the context of the present disclosure, it has been discovered that protective coating compositions comprising a multivalent metal salt, are provided with improved durability, in particular against dry mechanical abrasion, when compared to similar coating compositions not comprising a multivalent metal salt. Without wishing to be bound by theory, it is believed that the multivalent metal salts present in the coating composition promote crosslinking within the resulting protective coating and lead to the forming of a more densely packed protective coating onto the chromium surface.

The addition of a multivalent metal salt to the coating composition has been found to be particularly beneficial for those compositions comprising both a silane compound comprising a perfluoropolyether group and a tetrafunctional silane.

According to a particular aspect of the protective coating composition of the present disclosure, the multivalent metal salt for use herein is a cation of a multivalent metal. In a preferred aspect, the multivalent metal salt for use herein is selected from the group consisting of zinc, aluminum, zirconium, chromium, iron, manganese, titanium, calcium, magnesium, copper, and any combinations thereof.

According to a particular aspect of the protective coating composition of the present disclosure, the multivalent metal salt is a cation of a multivalent metal selected from the group consisting of zinc, aluminum, zirconium, and any combinations thereof.

In a preferred aspect, the multivalent metal salt for use herein is a cation of a multivalent metal selected from the group consisting of zinc, aluminum, and any combinations. More preferably, the multivalent metal salt comprises a cation of aluminum.

In a more preferred aspect, the multivalent metal salt for use herein is a cation of a multivalent metal selected from the group consisting of Zn(II), Al(III), Zr(IV), Cr(III), Fe(II), Ca(II), Mg(II), Cu(II), and any combinations thereof.

According to another preferred aspect of the protective coating composition of the present disclosure, the multivalent metal salt is a nitrate salt of a cation of a multivalent metal. More preferably, the multivalent metal salt is derived from Al(III), and is most preferably selected to be Al(NO₃)₃.

According to a typical aspect, the protective coating composition according to the present disclosure comprises a multivalent metal salt in an amount comprised between 0.01 wt% and 10 wt%, between 0.03 wt% and 8 wt%, between 0.05 wt% and 6 wt%, between 0.05 wt% and 5 wt%, between 0.1 wt% and 4 wt%, between 0.1 wt% and 3 wt%, between 0.1 wt% and 2 wt%, or even between 0.1 wt% and 1.5 wt%, based on the weight of the overall coating composition.

The protective coating composition of the present disclosure comprises, as a further technical feature, an acid. Acids for use herein are not particularly limited. Any acid commonly known in the art may be used in the context of the present disclosure. Suitable acids for use herein will be easily identified by those skilled in the art, in the light of the present description.

Examples of suitable acids for use herein include inorganic acids or organic acids. Suitable organic acids are advantageously selected from the group consisting of formic acid, acetic acid, citric acid, and any combinations or mixtures thereof. Preferably, the organic acid is acetic acid.

In a preferred aspect, the acid for use herein is an inorganic acid. Suitable inorganic acids are advantageously selected from the group consisting of hydrochloric acid, nitric acid, phosphoric acid, sulfonic acid, and any combinations or mixtures thereof.

In the context of the present disclosure, it was found that the addition of an acid, in particular an inorganic acid, may advantageously affect the chemical reactivity of the protective coating compositions according to the disclosure by - in particular - improving the solubility of the ingredients present in the protective coating composition. The addition of an acid, in particular an inorganic acid, was found to be particularly advantageous for those protective coating compositions comprising a silane compound comprising a perfluoropolyether group, a tetrafunctional silane and, in particular a multivalent metal salt.

The coating composition of the present disclosure comprises, as a further technical feature, a solvent comprising water. Solvents for use herein are not particularly limited. Any solvent comprising water commonly known in the art may be used in the context of the present disclosure. Suitable water-comprising solvents for use herein will be easily identified by those skilled in the art, in the light of the present description.

Examples of suitable water-comprising solvents for use herein include solvents comprising water and optionally also water-miscible solvents. Examples of suitable water-miscible solvents are primary or secondary mono- or polyalcohols having 1 to 6 carbon atoms, such as e.g. methanol, ethanol, propanol, isopropanol, n-butanol isobutanol, pentanol, hexanol or cyclohexanol. Other suitable water-miscible solvents include water-soluble ethers, such as dipropyleneglycol monomethylether (DPM), 2-butoxy ethanol or diethylene glycol dimethylether (Diglyme).

According to one exemplary aspect of the coating composition of the present disclosure, the solvent for use herein comprises a combination of water and an organic solvent, in particular an alcohol. Examples of suitable alcohols for use herein include, but are not limited to, methanol, ethanol, n-propanol, isopropanol and n-butanol. Particular examples of suitable water-comprising solvents for use herein include solvent combinations of water and alcohols such as e.g. water/methanol, water/ethanol, water/propanol or water/isopropanol.

According to a typical aspect of the coating composition of the present disclosure, the solvent for use herein has a water content of at least 25 wt%, at least 30 wt%, at least 40 wt%, at least 50 wt%, at least 70 wt%, at least 80 wt%, at least 90 wt%, at least 95 wt%, or even at least 98 wt%, based on the weight of the solvent.

In a preferred aspect of the coating composition, the solvent for use herein consists essentially of water, preferably deionized water.

According to an exemplary aspect, the protective coating composition comprises an organic solvent, in particular an alcohol, in an amount greater than 1 wt%, based on the weight of the overall coating composition. In an advantageous aspect, the organic solvent has a flashpoint of up to 40°C.

According to another exemplary aspect, the protective coating composition comprises an organic solvent in an amount greater than 2 wt%, greater than 5 wt%, greater than 10 wt%, greater than 30 wt%, or even greater than 50 wt%, based on the weight of the overall coating composition.

According to still another exemplary aspect, the protective coating composition comprises an organic solvent in an amount comprised between 1.5 and 95 wt%, between 5 and 90 wt%, between 10 and 90 wt%, between 30 and 85 wt%, between 50 and 85 wt%, or even between 60 and 80 wt%, based on the weight of the overall coating composition.

According to a preferred execution, the protective coating composition according to the present disclosure, comprises:
a) from 0.01 wt% to 10 wt%, from 0.3 wt% to 4 wt%, from 0.4 wt% to 2 wt%, from 0.5 wt% to 1 wt%, or even from 0.8 wt% to 1 wt% of a silane compound comprising a perfluoropolyether group;
b) from 0.05 wt% to 10 wt%, from 0.5 wt% to 6 wt%, from 1 wt% to 3.0 wt%, or even from 1.0 wt% to 2.5 wt% of a tetra-functional silane;
c) from 0.01 wt% to 10 wt%, from 0.05 wt% to 5 wt%, from 0.1 wt% to 2 wt%, or even from 0.1 wt% to 1.5 wt% of a multivalent metal salt;
d) an acid;
e) from 1 to 99 wt% of water, and
f) optionally, from 0 to 95 wt% of an organic solvent, in particular an alcohol; based on the weight of the overall coating composition.

The protective coating compositions of the present disclosure may further comprise optional additives commonly known in the field. Suitable additives will be typically selected depending on the targeted application. Exemplary additives include, but are not limited to, surface-active compounds, wetting agents, corrosion inhibitors, complexing agents, galvanization assistants, coating additives, coloring pigments, chelating agents, detergents, stabilizers, dispersants, enzymes, dyes or perfumes.

According to an exemplary aspect, the protective coating composition of the present disclosure has a concentration (solid content) of active agents (silane compound comprising a perfluoropolyether group/ tetra-functional silane/ multivalent metal salt) of less than 20 wt%, less than 15 wt%, less than 10 wt%, less than 8 wt%, less than 6 wt%, or even less than 5 wt%, based on the weight of the overall coating composition.

More typically, the protective coating composition has a concentration of active agents comprised between 0.01 wt% and 15 wt%, between 0.05 wt% and 10 wt%, between 0.1 wt% and 8 wt%, between 0.5 wt% and 8 wt%, between 1 wt% and 6 wt%, between 1 wt% and 5 wt%, between 1 wt% and 4 wt%, or even between 1 wt% and 3 wt%, based on the weight of the overall coating composition.

In another exemplary aspect, the protective coating composition of the present disclosure has a pH value of no greater than 5, no greater than 4, or even no greater than 3.

According to an advantageous aspect, the protective coating composition is free of fluorinated solvents, in particular free of fluorinated organic solvents, more in particular free of hydrofluoroethers. According to another advantageous aspect, the protective coating composition is free of non-fluorinated amino-functional silane.

The protective coating composition according to the present disclosure may be obtained according to techniques commonly known in the art. In a typical aspect, the coating composition is obtained by simply mixing the various ingredients - including the silane compound comprising a perfluoropolyether group, the tetrafunctional silane, the multivalent metal salt and the acid - into the solvent. The silane compound comprising a perfluoropolyether group may be obtained by commonly known synthetic techniques or may be commercially purchased and used as such.

The coating compositions of the present disclosure may be in the form of a solution, emulsion, suspension, dispersion or aerosol, depending on the targeted application. According to a typical aspect, the coating composition is in the form of an aqueous solution.

As already mentioned, the term "chromium surface" is meant to designate a metallic surface having a chromium content of at least 50wt%, based on the weight of the metallic surface. Suitable chromium surfaces for use herein will be easily identified by those skilled in the art, in the light of the present description.

Chromium surfaces for use herein may of course also be provided with a thin oxidic (such as Cr₂O₃ and CrO) or hydroxidic surface layer. Such layers, which are usually formed spontaneously on the chromium surfaces when exposed to the ambient conditions, are meant to be included in the term "chromium surface". Further, chromium oxides and chromium hydroxides which may be present in the chromium surface are also meant to be included in the term 'chromium content".

In a particular aspect of the disclosure, the chromium surface for use herein is a metallic surface having a chromium content of at least 50 wt%, at least 70 wt%, at least 80 wt%, at least 90 wt%, at least 95 wt%, or even at least 98 wt%, based on the weight of the metallic surface. In another particular aspect, the chromium surface for use herein consists essentially of chromium ("pure" chromium).

Chromium surfaces for use herein may advantageously refer to a metallic surface comprising a metallic alloy having a chromium content of at least 50wt%, based on the weight of the metallic alloy. According to one particular aspect of the present disclosure, the chromium surface for use herein comprises a chromium containing alloy. Chromium containing alloys are commonly known to those skilled in the art. The type and amounts of alloying constituents is determined in accordance with the desired end application. Exemplary constituents of chromium alloys include, in particular Zn, Al, Pb, Si, Mg, Sn, Cu, Cd, Fe, Co, Ni, Mn, Zr or Ti.

A chromium surface may also refer to the surface of a structure or a part composed entirely of chromium or a chromium-containing metallic alloy having a chromium content of at least 50wt%, based on the weight of the metallic alloy. Alternatively, a chromium surface may refer to the surface of a structure or a part coated or plated with pure chromium or with a chromium-containing metallic alloy having a chromium content of at least 50wt%, based on the weight of the metallic alloy ("chromated or chrome-plated surfaces"). Structures or parts coated or plated with chromium or a chromium-containing metallic alloy may be composed of other materials, such as e.g. other metals or metal alloys, polymers or composites. According to one preferred aspect of the present disclosure, the chromium surface for use herein is a chromated surface.

According to an advantageous aspect, the chromium surface for use herein may be present on a chrome-plated part, in particular a part chrome-plated by a galvanization process, in particular electrolytical galvanization or hot-dip galvanization process. In a particular aspect, the chromium surface is present on a part composed of a polymeric or composite material. According to an exemplary aspect, the polymeric or composite material is selected from the group consisting of polyolefins (polypropylene, polyethylene, high density polyethylene, blends of polypropylene), polyamide 6 (PA6), acrylonitrile butadiene styrene (ABS), PC/ABS blends, Polycarbonate (PC), Polyvinyl chloride (PVC), polyamide (PA), PUR, TPE, POM, polystyrene, poly(methyl) methacrylate, clear coats for vehicles, composite materials like fiber reinforced plastics, and any combinations or mixtures thereof. In a particular aspect, the chromium surface for use herein is present on a chrome-plated part comprises or is composed of acrylonitrile butadiene styrene (ABS).

Oily contamination for use herein are not particularly limited. Any oily contamination commonly encountered on metallic surfaces present for example in articles or parts present in home or commercial kitchens, in decorative household appliances and lighting, in restrooms, in bathrooms, in automotive vehicles, or in consumer electronics, may be used in the context of the present disclosure. Suitable oily contamination for use herein will be easily identified by those skilled in the art, in the light of the present description. Exemplary oily contamination for use herein include, but are not limited to, stains originating from oily or fat components.

In a particular aspect of the coating composition according to the disclosure, the oily contamination takes the form of a stain originating from oily or fat components selected from group consisting of moisturizing creams, body protection creams, sun creams, facial creams, therapeutic creams, human body fat, edible fat, edible oil, food oil, and any combinations or mixtures thereof.

According to a preferred aspect, the oily contamination takes the form of a fingerprint.

The present disclosure is directed to a method of reducing oily contamination from a chromium surface, which comprises the steps of:
a) providing a chromium surface;
b) applying a coating composition as described above to the chromium surface thereby forming a layer of the coating composition adjacent to the chromium surface; and
c) drying and/or curing the layer of the coating composition thereby forming a coating layer adjacent to the chromium surface.

The step of applying the coating composition may be performed according to techniques commonly known in the art. Suitable application methods depend on the number, size and shape of the chromium surface part to be treated, and are not particularly limited. Exemplary applications techniques include, but are not limited to, spraying, rolling, wiping or dipping. In a particular aspect, the step of applying the coating composition is performed by wiping or dipping.

The step of applying the coating composition may comprise a plurality of individual process steps, including pretreatment steps, of the chromium surface. For example, the chromium surface may be cleaned with a suitable preparation before treatment or treated with a suitable physical surface treatment such as e.g. corona or plasma treatment. The chromium may be appropriately washed after and between such pre-treatment steps.

After the step of applying the coating composition, the treated chromium surface may be allowed to drip off to remove the excess of coating compositions. The excess coating composition and any resulting residues may alternatively be removed by means of a wipe, a squeegee or doctor blade. As an additional, but optional step, the layer of coating composition formed onto the chromium surface after the application step may be subjected to a drying and/or curing step. The drying and/or curing may be performed according to techniques well known in the art. Suitable drying and/or curing may be performed at room temperature or at elevated temperature, typically at temperatures comprised between 20°C and 210°C, in particular between 20°C and 180°C. Conditions and temperatures for performing the drying and/or curing step may be appropriately chosen by the person skilled in the art. A typical drying and/or curing step may be performed e.g. in an appropriate oven.

In still another aspect, the present disclosure is directed to a method of imparting oily contamination removal properties to a chromium surface, which comprises the steps of:
a) providing a chromium surface;
b) applying a coating composition as described above to the chromium surface thereby forming a layer of the coating composition adjacent to the chromium surface; and
c) drying and/or curing the layer of the coating composition thereby forming a coating layer adjacent to the chromium surface.

In yet another aspect of the present disclosure, it is provided a method of treating a chromium surface, which comprises the steps of:
a) providing a chromium surface;
b) applying a coating composition as described above to the chromium surface thereby forming a layer of the coating composition adjacent to the chromium surface; and
c) drying and/or curing the layer of the coating composition thereby forming a coating layer adjacent to the chromium surface.

In yet another aspect of the present disclosure, it is provided a method of applying a low flammability and low volatility protective coating composition to a chromium surface, which comprises the steps of:
a) providing a chromium surface;
b) applying a protective coating composition as described above to the chromium surface thereby forming a layer of the protective coating composition adjacent to the chromium surface, wherein the tetrafunctional silane is a tetrafunctional orthosilicate having the following formula:

   Si(W)₄ **(V)**

   wherein W is a dialkyleneglycol ether, in particular dipropyleneglycol monoalkylether, more in particular dipropyleneglycol monomethylether; and
c) drying and/or curing the layer of the protective coating composition thereby forming a protective coating layer adjacent to the chromium surface.

All particular and preferred aspects relating to, in particular, the silane compound comprising a perfluoropolyether group, the tetrafunctional silane, the multivalent metal salt, the acid, the solvent, the chromium surface and the oily contamination as described above in the context of the coating composition, are fully applicable to the description of the methods of the present disclosure, as described above.

According to an advantageous aspect of the methods of the present disclosure, the drying/curing step, in particular the curing step, is performed at temperatures typically comprised between 50°C and 150°C, between 50°C and 100°C, between 60°C and 90°C, or even between 65°C and 85°C.

According to an advantageous aspect of the present disclosure, the methods as described herein are free of any step of pre-treating the chromium surface, in particular pretreatment steps aimed at achieving chemical or physical activation of the chromium surface, before applying the protective coating composition. Advantageously, the methods are free of any pretreatment step aimed at improving the wetting characteristics of the chromium surface. In particular, the methods as described herein are free of any step of pre-treating the chromium surface with an alkaline silicate solution ("waterglass").

According to still another aspect, the present disclosure is directed to a coated article comprising a chromium surface and a coating layer adjacent to the chromium surface, wherein the coating layer comprises a layer of the coating composition as described above which has been dried and/or cured onto the chromium surface.

According to yet another aspect, the present disclosure relates to an article having oily contamination removal properties, which comprises a chromium surface and a coating layer adjacent to the chromium surface, wherein the coating layer comprises a layer of the coating composition as described above which has been dried and/or cured onto the chromium surface.

All particular and preferred aspects relating to, in particular, the silane compound comprising a perfluoropolyether group, the tetrafunctional silane, the multivalent metal salt, the acid, the solvent, the chromium surface and the oily contamination as described above in the context of the coating composition, are fully applicable to the description of the coated article and article of the present disclosure, as described above.

In a particular aspect of the coated article, the chromium surface consists essentially of chromium. In another particular aspect of the coated article, the chromium surface comprises a chromium containing alloy. In still another particular aspect of the coated article, the chromium surface is a chromated surface, in particular a chrome plated substrate, more in particular a chrome plated polymeric or composite substrate.

According to an exemplary aspect of the coated article, the oily contamination takes the form of a fingerprint. According to another exemplary aspect of the coated article, the oily contamination takes the form of a stain originating from oily of fat components selected from group consisting of moisturizing creams, body protection creams, sun creams, facial creams, therapeutic creams, human body fat, edible fat, edible oil, food oil, and any combinations or mixtures thereof.

According to an advantageous aspect of the coated article or the article as described herein, the protective coating layer has a thickness of less than 1000 nm, less than 800 nm, less than 600 nm, less than 400 nm, less than 200 nm, less than 100 nm, or even less than 50 nm.

In still another advantageous aspect of the coated article or the article as described herein, the protective coating layer has a thickness comprised between 2 and 1000 nm, between 4 and 800 nm, between 5 and 600 nm, between 5 and 400 nm, between 10 and 200 nm, between 10 and 100 nm, or even between 10 and 50 nm.

According to an advantageous aspect, the coated article according to the disclosure has a static water contact angle of more than 80°, more than 85°, more than 90°, more than 100°, more than 105°, more than 110°, more than 115°, more than 120°, or even more than 125°, when measured according to the static water contact angle measurement method described in the experimental section.

According to another advantageous aspect, the coated article according to the disclosure has a static water contact angle of more than 80°, more than 85°, more than 90°, more than 100°, or even more than 105°, after 250 dry mechanical abrasion cycles when measured according to the dry mechanical abrasion test method described in the experimental section.

According to still another advantageous aspect, the coated article according to the disclosure has a static hexadecane contact angle of more than 40°, more than 45°, more than 50°, more than 55°, more than 60°, more than 65°, more than 70°, or even more than 75°, when measured according to the static hexadecane contact angle measurement method described in the experimental section.

According to yet another advantageous aspect, the coated article according to the disclosure has a static hexadecane contact angle of more than 40°, more than 45°, more than 50°, more than 55°, more than 60°, or even more than 65°, after 250 dry mechanical abrasion cycles when measured according to the dry mechanical abrasion test method described in the experimental section.

According to yet another advantageous aspect, the coated article according to the disclosure has an oily contamination removal performance of less than 5 dry wipes, less than 4 dry wipes, less than 3 dry wipes, or even less than 2 dry wipes, when measured according to the oily contamination removal test method described in the experimental section.

According to still another aspect, the present disclosure relates to the use of a coating composition as described above for reducing oily contamination from a chromium surface.

In yet another aspect, the present disclosure relates to the use of a coating composition as described above for imparting oily contamination removal properties to a chromium surface.

All particular and preferred aspects relating to, in particular, the silane compound comprising a perfluoropolyether group, the tetrafunctional silane, the multivalent metal salt, the acid, the solvent, the chromium surface and the oily contamination as described above in the context of the coating composition, are fully applicable to the description of the uses of the present disclosure, as described above.

Item 1 is a protective coating composition for reducing oily contamination from a chromium surface, wherein the composition comprises:
a) a silane compound comprising a perfluoropolyether group;
b) a tetrafunctional silane;
c) a multivalent metal salt;
d) an acid; and
e) a solvent comprising water and optionally, an organic solvent.

Item 2 is the coating composition according to item 1, wherein the silane compound comprising a perfluoropolyether group has the following formula:

Rf{-X-[C(R¹)₂Si(Y)₃₋ₓ(R)ₓ]_{y}}_{z} (I)

wherein:
Rf is a polyfluoropolyether group;
X is a divalent or trivalent organic linking group;
each Y is independently halogen, alkoxy, hydroxyl, acyloxy, polyalkyleneoxy, or aryloxy;
R is an alkyl group having up to 8 carbon atoms or a phenyl group;
each R¹ is independently hydrogen or an alkyl having up to 4 carbon atoms;
x is 0 or 1 or 2;
y has a value from 1 to 8; and
z is 1 or 2.

Item 3 is a protective coating composition according to any of item 1 or 2, wherein the silane compound comprising a perfluoropolyether group has the following formula:

Rf{Q-X'-[Si(Y)₃₋ₓ(R)ₓ]_{y}}_{z} (II)

wherein:
Q is a bond, -C(O)-N(R')-, -C(O)-O-, or -SO₂N(R')-, wherein R' is hydrogen or an alkyl having up to 4 carbon atoms; and
X' is a divalent or trivalent organic linking group comprising at least one of alkylene or arylalkylene, each of which is optionally interrupted by at least one functional group that is independently selected from the group of ether, thioether, sulfone, amine, ester, amide, carbamate, or urea.

Item 4 is a protective coating composition according to any of the preceding items, wherein Y is an alkoxy group, and wherein x is in particular 0.

Item 5 is a protective coating composition according to any of item 3 or 4, wherein Q is -C(O)-N(R')-, and wherein X' is a divalent or trivalent alkylene that is optionally interrupted by at least one functional group that is independently amine, ether, ester, carbamate, or urea.

Item 6 is a protective coating composition according to any of items 3 to 5, wherein Q is -C(O)-N(R')-, and wherein X' is a divalent or trivalent alkylene that is optionally interrupted by at least one functional group that is amine.

Item 7 is a protective coating composition according to any of items 3 to 6, wherein Q is -C(O)-N(R')-, and wherein X' is a divalent alkylene having up to 10 carbon atoms, in particular up to 8 carbon atoms.

Item 8 is a protective coating composition according to item 7, wherein Q is -C(O)-N(R')-, and wherein X' is a divalent alkylene having between 2 and 10, between 2 and 8, or even between 2 and 6 carbon atoms.

Item 9 is a protective coating composition according to item 8, wherein R' is hydrogen, and wherein X' is -(CH₂)₃-.

Item 10 is a protective coating composition according to item 9, wherein the silane compound comprising a perfluoropolyether group has the following formula:

Rf-C(O)-N(H)-(CH₂)₃-Si(Y)₃ (III)

Item 11 is a protective coating composition according to any of items 3 to 6, wherein Q is -C(O)-N(R')-, and wherein X' is a divalent alkylene that is interrupted by at least one functional group that is amine, and wherein the amine functional group is in particular selected from the group of secondary or tertiary amines, or even quaternary ammoniums.

Item 12 is a protective coating composition according to item 11, wherein R' is hydrogen, and wherein X' is -(CH₂)₃-N⁺(CH3)(CH3)-(CH₂)₃-.

Item 13 is a protective coating composition according to item 12, wherein the silane compound comprising a perfluoropolyether group has the following formula:

Rf-C(O)-N(H)-(CH₂)₃-N⁺(CH₃)(CH₃)-(CH₂)₃-Si(Y)₃ (IV)

Item 14 is a protective coating composition according to any of the preceding items, wherein Y is an alkoxy group, and wherein the alkyl of the alkoxy group is selected from the group consisting of methyl, ethyl, n-propyl, isopropyl, n-butyl groups, and any combinations thereof.

Item 15 is a protective coating composition according to any of the preceding items, wherein Rf comprises perfluorinated repeating units comprising at least one of -(CₙF₂ₙO)-, -(CF(Z)O)-, -(CF(Z)CₙF2ₙO)-, or -(CₙF₂ₙCF(Z)O)-; and wherein Z is a perfluoroalkyl group or a perfluoroalkoxy group, each of which is optionally interrupted by at least one ether linkage, and n is an integer from 1 to 12.

Item 16 is a protective coating composition according to any of the preceding items, wherein Rf is -CF₂O(CF₂O)ₘ(C₂F₄O)_{b}CF₂-, -CF₂O(C₂F₄O)_{b}CF₂-, -(CF₂)₃O(C₄F₈O)_{b}(CF₂)₃-, or -CF(CF₃)-(OCF₂CF(CF₃))_{b}O-Rf'-O(CF(CF₃)CF₂O)_{b}CF(CF₃)-, and wherein Rf is a perfluoroalkylene group optionally interrupted in chain by at least one ether or amine linkage, m is 1 to 50, and b is 3 to 40.

Item 17 is a protective coating composition according to any of the preceding items, wherein Rf is C₃F₇O(CF(CF₃)CF₂O)ₐCF(CF₃)-, C₃F₇O(CF₂CF₂CF₂O)ₐCF₂CF₂-, or CF₃O(C₂F₄O)ₐCF₂-, and wherein a has an average value of 3 to 50.

Item 18 is a protective coating composition according to any of the preceding items, wherein the tetrafunctional silane is a tetrafunctional orthosilicate having preferably the following formula:

Si(W)₄ (V)

wherein:
W is an alkoxy group or a glycol ether group.

Item 19 is a protective coating composition according to item 18, wherein W is an alkoxy group having up to 8 carbon atoms, up to 6 carbon atoms, or even up to 4 carbon atoms.

Item 20 is a protective coating composition according to item 19, wherein the alkyl of the alkoxy group is selected from the group consisting of methyl, ethyl, n-propyl, isopropyl, n-butyl groups, and any combinations thereof.

Item 21 is a protective coating composition according to item 18, wherein W is an alkyleneglycol, in particular 2-alkoxy ethanol, more in particular 2-butoxy ethanol or W is a dialkyleneglycol ether, in particular dipropyleneglycol monoalkylether, more in particular dipropyleneglycol monomethylether.

Item 22 is a protective coating composition according to any of the preceding items, wherein the multivalent metal salt comprises a cation of a multivalent metal selected from the group consisting of zinc, aluminum, zirconium, chromium, iron, manganese, titanium, calcium, magnesium, copper, and any combinations thereof.

Item 23 is a protective coating composition according to any of the preceding items, wherein the multivalent metal salt comprises a cation of a multivalent metal selected from the group consisting of zinc, aluminum, zirconium, and any combinations thereof.

Item 24 is a protective coating composition according to any of the preceding items, wherein the multivalent metal salt comprises a cation of aluminum.

Item 25 is a protective coating composition according to any of the preceding items, wherein the multivalent metal salt comprises a cation of a multivalent metal selected from the group consisting of Zn(II), Al(III), Zr(IV), Cr(III), Fe(II), Ca(II), Mg(II), Cu(II), and any combinations thereof.

Item 26 is a protective coating composition according to any of the preceding items, wherein the multivalent metal salt is a nitrate salt of a cation of a multivalent metal.

Item 27 is a protective coating composition according to any of the preceding items, wherein the multivalent metal salt is derived from Al(III), and is preferably selected to be Al(NO₃)₃.

Item 28 is a protective coating composition according to any of the preceding items, wherein the acid is selected from the group of inorganic acids or organic acids.

Item 29 is a protective coating composition according to item 28, wherein the acid is an organic acid preferably selected from the group consisting of formic acid, acetic acid, citric acid, and any combinations or mixtures thereof.

Item 30 is a protective coating composition according to item 28, wherein the acid is an inorganic acid preferably selected from the group consisting of hydrochloric acid, nitric acid, phosphoric acid, and any combinations or mixtures thereof.

Item 31 is a protective coating composition according to any of the preceding items, wherein the solvent consists essentially of water, preferably deionized water.

Item 32 is a protective coating composition according to any of items 1 to 30, wherein the organic solvent is selected from the group of alcohols, in particular from the group consisting of ethanol, n-propanol, isopropanol, n-butanol, and any combinations thereof.

Item 33 is a protective coating composition according to any of items 1 to 30, wherein the organic solvent comprises isopropanol.

Item 34 is a protective coating composition according to any of items 1 to 30, wherein the organic solvent is selected from the group of water-miscible solvents, in particular from the group of water-soluble ethers, more in particular from the group consisting of dipropyleneglycol monomethylether (DPM), 2-butoxy ethanol, diethylene glycol dimethylether (Diglyme), and any combinations thereof.

Item 35 is a protective coating composition according to any of items 32 to 34, which comprises an organic solvent, in an amount greater than 1 wt%, based on the weight of the overall coating composition; and wherein the organic solvent has preferably a flashpoint of up to 40°C.

Item 36 is a protective coating composition according to item 35, which comprises an organic solvent in an amount greater than 2 wt%, greater than 5 wt%, greater than 10 wt%, greater than 30 wt%, or even greater than 50 wt%, based on the weight of the overall coating composition.

Item 37 is a protective coating composition according to item 35, which comprises an organic solvent in an amount comprised between 1.5 and 95 wt%, between 5 and 90 wt%, between 10 and 90 wt%, between 30 and 85 wt%, between 50 and 85 wt%, or even between 60 and 80 wt%, based on the weight of the overall coating composition.

Item 38 is a protective coating composition according to any of the preceding items, which comprises a silane compound comprising a perfluoropolyether group in an amount of at least 0.01 wt%, at least 0.05 wt%, at least 0.1 wt%, at least 0.3 wt%, at least 0.4 wt%, at least 0.5 wt%, or even at least 0.8 wt%, based on the weight of the overall coating composition.

Item 39 is a protective coating composition according to any of the preceding items, which comprises a silane compound comprising a perfluoropolyether group in an amount of less than 10 wt%, less than 8 wt%, less than 6 wt%, less than 4 wt%, less than 2 wt%, or even less than 1 wt%, based on the weight of the overall coating composition.

Item 40 is a protective coating composition according to any of the preceding items, which comprises a silane compound comprising a perfluoropolyether group in an amount comprised between 0.01 wt% and 10 wt%, between 0.03 wt% and 8 wt%, between 0.05 wt% and 6 wt%, between 0.1 wt% and 5 wt%, between 0.3 wt% and 4 wt%, between 0.3 wt% and 3 wt%, between 0.3 wt% and 2 wt%, between 0.4 wt% and 2 wt%, between 0.5 wt% and 1 wt%, or even between 0.8 wt% and 1 wt%, based on the weight of the overall coating composition.

Item 41 is a protective coating composition according to any of the preceding items, which comprises a tetra-functional silane in an amount comprised between 0.05 wt% and 10 wt%, between 0.08 wt% and 8 wt%, between 0.1 wt% and 8 wt%, between 0.2 wt% and 6 wt%, between 0.5 wt% and 6 wt%, between 0.6 wt% and 5 wt%, between 0.6 wt% and 4 wt%, between 0.6 wt% and 3.0 wt%, or even between 0.6 wt% and 2.5 wt%, based on the weight of the overall coating composition.

Item 42 is a protective coating composition according to any of the preceding items, which comprises a multivalent metal salt in an amount comprised between 0.01 wt% and 10 wt%, between 0.03 wt% and 8 wt%, between 0.05 wt% and 6 wt%, between 0.05 wt% and 5 wt%, between 0.1 wt% and 4 wt%, between 0.1 wt% and 3 wt%, between 0.1 wt% and 2 wt%, or even between 0.1 wt% and 1.5 wt%, based on the weight of the overall coating composition.

Item 43 is a protective coating composition according to any of the preceding items, which comprises:
a) from 0.01 wt% to 10 wt%, from 0.3 wt% to 4 wt%, from 0.4 wt% to 2 wt%, from 0.5 wt% to 1 wt%, or even from 0.8 wt% to 1 wt% of a silane compound comprising a perfluoropolyether group;
b) from 0.05 wt% to 10 wt%, from 0.5 wt% to 6 wt%, from 1 wt% to 3.0 wt%, or even from 1.0 wt% to 2.5 wt% of a tetra-functional silane;
c) from 0.01 wt% to 10 wt%, from 0.05 wt% to 5 wt%, from 0.1 wt% to 2 wt%, or even from 0.1 wt% to 1.5 wt% of a multivalent metal salt;
d) an acid;
e) from 1 to 99 wt% of water, and
f) optionally, from 0 to 95 wt% of an organic solvent, in particular an alcohol; based on the weight of the overall coating composition.

Item 44 is a protective coating composition according to any of the preceding items, which has a concentration (solid content) of active agents (silane compound comprising a perfluoropolyether group/ tetra-functional silane/ multivalent metal salt) of less than 20 wt%, less than 15 wt%, less than 10 wt%, less than 8 wt%, less than 6 wt%, or even less than 5 wt%, based on the weight of the overall coating composition.

Item 45 is a protective coating composition according to item 44, which has a concentration of active agents comprised between 0.01 wt% and 15 wt%, between 0.05 wt% and 10 wt%, between 0.1 wt% and 8 wt%, between 0.5 wt% and 8 wt%, between 1 wt% and 6 wt%, between 2 wt% and 6 wt%, between 2 wt% and 5 wt%, or even between 3 wt% and 5 wt%, based on the weight of the overall coating composition.

Item 46 is a protective coating composition according to any of the preceding items, which has a pH value of no greater than 5, no greater than 4, or even no greater than 3.

Item 47 is a protective coating composition according to any of the preceding items, which is free of fluorinated solvents, in particular free of fluorinated organic solvents, more in particular free of hydrofluoroethers.

Item 48 is a protective coating composition according to any of the preceding items, which is free of non-fluorinated amino-functional silane.

Item 49 is a protective coating composition according to any of the preceding items, wherein the chromium surface is a metallic surface having a chromium content of at least 50 wt%, at least 70 wt%, at least 80 wt%, at least 90 wt%, at least 95 wt%, or even at least 98 wt%, based on the weight of the metallic surface.

Item 50 is a protective coating composition according to any of the preceding items, wherein the chromium surface consists essentially of chromium.

Item 51 is a protective coating composition according to any of items 1 to 50, wherein the chromium surface comprises a chromium containing alloy.

Item 52 is a protective coating composition according to any of items 1 to 50, wherein the chromium surface is a chromated surface.

Item 53 is a protective coating composition according to any of the preceding items, wherein the oily contamination takes the form of a fingerprint.

Item 54 is a protective coating composition according to any of the preceding items, wherein the oily contamination takes the form of a stain originating from oily of fat components selected from group consisting of moisturizing creams, body protection creams, sun creams, facial creams, therapeutic creams, human body fat, edible fat, edible oil, food oil, and any combinations or mixtures thereof.

Item 55 is a method of treating a chromium surface, which comprises the steps of:
a) providing a chromium surface;
b) applying a protective coating composition according to any of the preceding items to the chromium surface thereby forming a layer of the protective coating composition adjacent to the chromium surface; and
c) drying and/or curing the layer of the protective coating composition thereby forming a protective coating layer adjacent to the chromium surface.

Item 56 is a method of reducing oily contamination from a chromium surface, which comprises the steps of:
a) providing a chromium surface;
b) applying a protective coating composition according to any of items 1 to 54 to the chromium surface thereby forming a layer of the protective coating composition adjacent to the chromium surface; and
c) drying and/or curing the layer of the protective coating composition thereby forming a protective coating layer adjacent to the chromium surface.

Item 57 is a method of imparting oily contamination removal properties to a chromium surface, which comprises the steps of:
a) providing a chromium surface;
b) applying a protective coating composition according to any of items 1 to 54 to the chromium surface thereby forming a layer of the protective coating composition adjacent to the chromium surface; and
c) drying and/or curing the layer of the protective coating composition thereby forming a protective coating layer adjacent to the chromium surface.

Item 58 is a method of applying a low flammability and low volatility protective coating composition to a chromium surface, which comprises the steps of:
a) providing a chromium surface;
b) applying a protective coating composition according to item 21 to the chromium surface thereby forming a layer of the protective coating composition adjacent to the chromium surface, and wherein W is a dialkyleneglycol ether, in particular dipropyleneglycol monoalkylether, more in particular dipropyleneglycol monomethylether; and
c) drying and/or curing the layer of the protective coating composition thereby forming a protective coating layer adjacent to the chromium surface.

Item 59 is a method according to any of items 55 to 58, wherein the drying/curing step, in particular the curing step, is performed at temperatures typically comprised between 50°C and 150°C, between 50°C and 100°C, or even between 60°C and 90°C.

Item 60 is a method according to any of items 55 to 58, which is free of any step of pre-treating the chromium surface, in particular pre-treatment steps aimed at achieving chemical or physical activation of the chromium surface, before applying the protective coating composition.

Item 61 is a coated article comprising a chromium surface and a protective coating layer adjacent to the chromium surface, wherein the protective coating layer comprises a layer of the protective coating composition according to any of items 1 to 54 which has been dried and/or cured onto the chromium surface.

Item 62 is a coated article according to item 61, wherein the chromium surface consists essentially of chromium.

Item 63 is a coated article according to item 61, wherein the chromium surface comprises a chromium containing alloy.

Item 64 is a coated article according to item 61, wherein the chromium surface is a chromated surface, in particular a chrome plated substrate, more in particular a chrome plated polymeric or composite substrate.

Item 65 is a coated article according to any of items 61 to 64, wherein the oily contamination takes the form of a fingerprint.

Item 66 is a coated article according to any of items 61 to 64, wherein the oily contamination takes the form of a stain originating from oily of fat components selected from group consisting of moisturizing creams, body protection creams, sun creams, facial creams, therapeutic creams, human body fat, edible fat, edible oil, food oil, and any combinations or mixtures thereof.

Item 67 is coated article according to any of items 61 to 66, which has a static water contact angle of more than 80°, more than 85°, more than 90°, more than 100°, more than 105°, more than 110°, more than 115°, more than 120°, or even more than 125°, when measured according to the static water contact angle measurement method described in the experimental section.

Item 68 is a coated article according to any of items 61 to 67, which has a static water contact angle of more than 80°, more than 85°, more than 90°, more than 100°, or even more than 105°, after 250 dry mechanical abrasion cycles when measured according to the dry mechanical abrasion test method described in the experimental section.

Item 69 is a coated article according to any of items 61 to 68, which has a static hexadecane contact angle of more than 40°, more than 45°, more than 50°, more than 55°, more than 60°, more than 65°, more than 70°, or even more than 75°, when measured according to the static hexadecane contact angle measurement method described in the experimental section.

Item 70 is a coated article according to any of items 61 to 69, which has a static hexadecane contact angle of more than 40°, more than 45°, more than 50°, more than 55°, more than 60°, or even more than 65°, after 250 dry mechanical abrasion cycles when measured according to the dry mechanical abrasion test method described in the experimental section.

Item 71 is a coated article according to any of items 61 to 70, which has an oily contamination removal performance of less than 5 dry wipes, less than 4 dry wipes, less than 3 dry wipes, or even less than 2 dry wipes, when measured according to the oily contamination removal test method described in the experimental section.

Item 72 is an article having oily contamination removal properties, which comprises a chromium surface and a protective coating layer adjacent to the chromium surface, wherein the protective coating layer comprises a layer of the protective coating composition according to any of items 1 to 50 which has been dried and/or cured onto the chromium surface.

Item 73 is a coated article or an article according to any of items 61 to 72, wherein the protective coating layer has a thickness of less than 1000 nm, less than 800 nm, less than 600 nm, less than 400 nm, less than 200 nm, less than 100 nm, or even less than 50 nm.

Item 74 is coated article or an article according to any of items 61 to 73, wherein the protective coating layer has a thickness comprised between 2 and 1000 nm, between 4 and 800 nm, between 5 and 600 nm, between 5 and 400 nm, between 10 and 200 nm, between 10 and 100 nm, or even between 10 and 50 nm.

Item 75 is the use of a protective coating composition according to any of items 1 to 54 for reducing oily contamination from a chromium surface.

Item 76 is the use of a coating composition according to any of items 1 to 54 for imparting oily contamination removal properties to a chromium surface.

### EXAMPLES

The present disclosure is further illustrated by the following examples. These examples are merely for illustrative purposes only and are not meant to be limiting on the scope of the appended claims.

### Test methods and procedures:

### Contact Angle Measurement

Static contact angle measurements are performed using Millipore water (WCA) or hexadecane (HCA, analytical grade) with a DSA100 contact angle analyzer (available from Krüss GmbH). Contact angle is measured on sessile drop (3 µL) and is measured 30 sec after deposition. The values reported are the average of at least 4 separate measurements.

### Dry mechanical abrasion testing (Durability testing)

Abrasion tests are performed on a 5900 Reciprocating Abraser (available from Taber Industries) by employing a 2.5 N force and a velocity of 60 cycles/minutes. The cloth used for the abrasion cycles is a 13.5 crockmeter cloth (crockmeter squares, 100% cotton).

### Oily contamination removal test method

The oily contamination removal test method is performed according to a slightly modified version of test method BMW PR 506:
1.4 ml of an artificial finger fat (AFF) obtained by combining: 50g of artificial alkaline sweat (according to DIN EN ISO 105-E04), 2g of paraffin oil (commercially available from Sigma-Aldrich), 1.5g Lecithin (Fluidlecithin Super, commercially available from Brennessel, Munich, Germany) and 0.3g of PNC 400 (polymer commercially available from Brennessel, Munich, Germany), is applied onto a 4 cm x 4 cm "Glorex Bastelfilz weiß" felt piece (100% acrylic art. 6.1212.611, obtained from OBI, Germany) and spread with a wooden spatula. After 2 to 4 minutes a silicone rubber stamp - with a thumb profile - is pressed onto the felt piece with a force of 30 N for 5 seconds. Then, the silicone stamp is pressed onto the test chromium surface using a force of 30 N for 5 seconds. The samples are allowed to dry at room temperature for 24 hours before evaluation.

The removal of the oily contamination is performed by wiping the oily-contaminated surface with a wet kimwipe (dimension 0.3 cm x 0.5 cm, immersed with 0.5 ml of cleaning spirit KLAX® Brennspiritus, available from Chemica GmbH & Co. KG, Sarstedt, Germany) or a similar dry kimwipe (not immersed with spirit) using a force of 10N. The oily contamination removal performance is measured on the as-deposited coating composition (no abrasion). The data reflects the number of dry or wet wipes, respectively, which are necessary to fully remove the oily contamination.

### Test panels/substrates used for testing:

Chrome plated ABS test substrates having high roughness (0.9 µm, determined by confocal laser microscopy) are available from HSO GmbH (Solingen, Germany). The test panels have a dimension of 100 mm x 50 mm x 2 mm.

### Materials employed:

In the examples, the following raw materials are used:
**HFPO-Silane** is an oligomer having a weight average molecular weight of 1375 g/mol, obtained from 3M Belgium (Belgium, Zwijndrecht), wherein HFPO is: CF₃CF₂CF₂O(CF(CF₃)CF₂O)ₙCF(CF₃)- (where n = 6). Alternatively, it can be synthesized by the reaction of the corresponding HFPO-oligomer methyl ester with 3-aminopropyltrimethoxysilane according to the procedure described in US 3,646,085 (example 4).

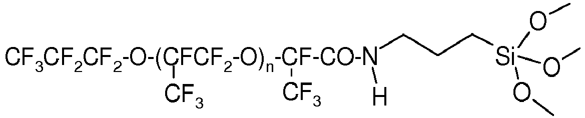

**HFPO-QUAT silane,** is an oligomer having a weight average molecular weight of 1498 g/mol, obtained from 3M Belgium (Belgium, Zwijndrecht). Alternatively, it can be synthesized by the reaction of the corresponding HFPO-oligomer methyl ester with N,N-dimethylaminopropylamine and 3-chloropropyltrimethoxysilane according to the procedure described in WO 2009/045993 (example 1).

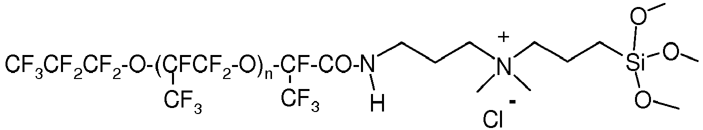

**Tetraethyl orthosilicate (TEOS),** is a tetrafunctional silane, commercially available from Aldrich.

**Dipropyleneglycol monomethyl ether (DPM),** is a glycol, commercially available from Brenntag.

**Tetra (methoxy dipropylenoxy) silane (Si(ODPM)₄),** is a tetrafunctional silane prepared according to the procedure described below.

**Aluminum nitrate nonahydrate (Al(NO₃)₃ x 9H₂0),** is a multivalent metal salt, commercially available from Aldrich.

**Zinc nitrate hexahydrate (Zn(NO₃)₂ x 6H₂0),** is a multivalent metal salt, commercially available from Aldrich.

**Hydrochloric acid,** is a commercially available as a 37% solution in water from Aldrich.

**Phosphoric acid,** is a commercially available as a 85% solution in water from Applichem.

**Amberlyst 36 DRY,** is a cationic exchange catalyst commercially available from Dow.

### Preparations:

### Preparation of the tetrafunctional silane (Si(ODPM)₄)

A 250 ml round bottom glass flask is charged with 120.8 g DPM, 20.8 g TEOS and 2.4 g Amberlyst 36DRY acidic ion exchange resin. About 18.4 g ethanol is distilled off at 65°C using a Büchi rotavapor and waterjet vacuo. A 50% solids clear liquid solution is obtained. The efficiency of the reaction is verified by ²⁹Si NMR-Spectroscopy.

### Preparation of the coating compositions

The coating compositions are simply prepared by adding the appropriate amount of the various components in a 500mL plastic bottle, according to the following sequence. First, the optional organic solvent and the tetrafunctional silane are added. Then, the silane compound comprising a perfluoropolyether group is slowly added. The solution is vigorously stirred for 10 min to obtain a cloudy homogeneous mixture, and then deionized water, the acid and an aqueous solution of Al(NO₃)₃ are subsequently added and stirred for 1h at room temperature. After that, the well mixed solution is left standing at room temperature for 24h co-condensation.

### Coating procedure:

### Substrate cleaning:

Prior to testing the chromium test panels are cleaned by wiping once with isopropyl alcohol using a soaked fluff-free paper tissue (3M professional Panel Wipe 34567) and left to dry at 20°C for 3 minutes.

### Dip-coating:

The samples are dip-coated using a RDC 21-K Dip Coater available from Bungard Elektronik GmbH (dipping speed: 300 mm/min, immersion time: 1 minute), followed by drying at 20°C for 1 minute and oven (Heraeus, Germany)curing at 80°C for 10 minutes. The so-treated sample is used for further testing.

### Examples:

### Examples 1 to 8 and comparative example C1: Formulations.

The formulations used for the various coating compositions are described in Tables 1 and 2 below. Formulation C1 is a comparative example using a composition not comprising any multivalent metal salt.

**Table 1:**

| Ingredient (g) | Ex.1 | Ex.2 | Ex.3 | Ex.4 | C1 |
|---|---|---|---|---|---|
| HFPO-Silane | 2 | 1 | 1 | 1 | 1 |
| HFPO-QUAT silane | - | - | - | - | - |
| TEOS | 5.1 | 5.1 | 5.0 | 10.2 | 10.2 |
| Si(ODPM)₄ | - | - | - | - | - |
| Al(NO₃)₃, 10 wt% aqueous | 20.4 | 40.8 | 20.4 | 40.8 | - |
| Al(NO₃)₃, 1 wt% aqueous | - | - | - | - | - |
| Zn(NO₃)₂, 1 wt% aqueous | - | - | - | - | - |
| isopropanol | 182.7 | 182.7 | 182.7 | 177.5 | 177.6 |
| water | 27 | 7.6 | 28 | 7.6 | 48.4 |
| HCl | 1 | 1 | 1 | 1 | 1 |
| H₃PO₄ | - | - | - | - | - |

**Table 2:**

| Ingredient (g) | Ex.5 | Ex.6 | Ex.7 | Ex.8 |
|---|---|---|---|---|
| HFPO-Silane | - | - | - | - |
| HFPO-QUAT silane | 2 | 0.6 | 2.4 | 0.6 |
| TEOS | 5.1 | - | 2.68 | - |
| Si(ODPM)₄ | - | 1.34 | - | 1.34 |
| Al(NO₃)₃, 10 wt% aqueous | 20.4 | - | - | - |
| Al(NO₃)₃, 1 wt% aqueous | - | 5 | 20 | - |
| Zn(NO₃)₂, 1 wt% aqueous | - | - | - | 5 |
| isopropanol | 182.7 | - | - | - |
| water | 27 | 93 | 374.8 | 93 |
| HCl | 1 | - | - | - |
| H₃PO₄ | - | 0.7 | 0.7 | 0.7 |

Examples 1 to 7 and comparative example C1: Oleophobic and hydrophilic properties. The coating formulations used in the experiments are applied on a chrome plated ABS test substrate. The data presented in Table 3 reflect the oleophobic and hydrophilic properties of the various coating compositions.

**Table 3:**

| Example | Uncoated | | Coated | |
|---|---|---|---|---|
| | Water contact angle [°] | Hexadecane contact angle [°] | Water contact angle [°] | Hexadecane contact angle [°] |
| 1 | 75 | 9 | 128 | 77 |
| 2 | 75 | 9 | 124 | 73 |
| 3 | 75 | 9 | 123 | 72 |
| 4 | 75 | 9 | 111 | 66 |
| 5 | 75 | 9 | 112 | 74 |
| 6 | 84 | <5 | 91 | 30 |
| 7 | 84 | <5 | 100 | 52 |
| C1 | 75 | 9 | 123 | 71 |

As shown in Table 3, protective coating compositions according to the present disclosure combine both excellent oleophobic and hydrophobic properties.

### Examples 1, 5, 6, 7 and C1: Mechanical abrasion resistance.

**Table 4:**

| Example | Uncoated | | Coated | | Dry mechanical abrasion | After abrasion | |
|---|---|---|---|---|---|---|---|
| | WCA [°] | HCA [°] | WCA [°] | HCA [°] | | WCA [°] | HCA [°] |
| 1 | 75 | 9 | 128 | 77 | 2.5 N, 250x, 60 c/min | 107 | 70 |
| 5 | 75 | 9 | 112 | 74 | 2.5 N, 250x, 60 c/min | 96 | 63 |
| 6 | 84 | <5 | 91 | 30 | 9 N, 50x, 60 c/min | 84 | 29 |
| 7 | 84 | <5 | 100 | 52 | 9 N, 50x, 60 c/min | 92 | 50 |
| C1 | 75 | 9 | 123 | 71 | 2.5 N, 250x, 60 c/min | 92 | 50 |

As shown in Table 4, the protective coating compositions according to the present disclosure comprising a multivalent metal salt (Examples 1, 5, 6 and 7) have improved durability of the resulting protective coating applied onto the treated surface, in particular the dry mechanical abrasion resistance, when compared to a protective coating composition not comprising a multivalent metal salt (Example CI).

### Examples 4, 6, 7 and C2: Oily contamination removal performance.

The corresponding coating formulations are applied on chrome plated ABS test substrates and tested in terms of oily contamination removal performance according to the oily contamination removal test method described hereinbefore. Example C2 is a comparative example using uncoated chrome surface.

The removal of the oily contamination is performed according the oily contamination removal test method. The oily contamination removal performance is measured on the as-deposited coating composition (no abrasion) and is reflected by the number of wipes (dry or wet) necessary to completely remove the oily contamination (assessed by visual inspection). If complete removal of the oily contamination is achieved after 5 wipes (dry or wet), the oily contamination removal performance test is passed and the trial is characterized as "pass". If complete removal of the oily contamination is not achieved after 5 wipes (dry or wet), the oily contamination removal performance test is not passed and the trial is characterized as "x": failed. The data presented in Table 5 reflect the number of (dry or wet) wipes necessary to fully remove the oily contamination.

**Table 5:**

| Example | FP-removal (dry wipes) | FP-removal (wet wipes) |
|---|---|---|
| 4 | 5 | - |
| 6 | - | 2 |
| 7 | - | 3 |
| C2 | x | x |

## Claims

1. A method of reducing oily contamination from a chromium surface, which comprises the steps of:
a) providing a chromium surface;
b) applying a protective coating composition to the chromium surface thereby forming a layer of the protective coating composition adjacent to the chromium surface; and
c) drying and/or curing the layer of the protective coating composition thereby forming a protective coating layer adjacent to the chromium surface,
wherein the protective coating composition comprises:
a) a silane compound comprising a perfluoropolyether group;
b) a tetrafunctional silane;
c) a multivalent metal salt;
d) an acid; and
e) a solvent comprising water and optionally, an organic solvent.

2. A method according to claim 1, wherein the silane compound comprising a perfluoropolyether group has the following formula:
Rf{-X-[C(R¹)₂Si(Y)₃₋ₓ(R)ₓ]_{y}}_{z} (I)
wherein:
Rf is a polyfluoropolyether group;
X is a divalent or trivalent organic linking group;
each Y is independently halogen, alkoxy, hydroxyl, acyloxy, polyalkyleneoxy, or aryloxy;
R is an alkyl group having up to 8 carbon atoms or a phenyl group;
each R¹ is independently hydrogen or an alkyl having up to 4 carbon atoms;
x is 0 or 1 or 2;
y has a value from 1 to 8; and
z is 1 or 2.

3. A method according to any of claim 1 or 2, wherein the silane compound comprising a perfluoropolyether group has the following formula:
Rf{Q-X'-[Si(Y)₃₋ₓ(R)ₓ]_{y}}_{z} (II)
wherein :
Q is a bond, -C(O)-N(R')-, -C(O)-O-, or -SO₂N(R')-, wherein R' is hydrogen or an alkyl having up to 4 carbon atoms; and
X' is a divalent or trivalent organic linking group comprising at least one of alkylene or arylalkylene, each of which is optionally interrupted by at least one functional group that is independently selected from the group of ether, thioether, sulfone, amine, ester, amide, carbamate, or urea.

4. A method according to any of the preceding claims, wherein the tetrafunctional silane is a tetrafunctional orthosilicate having preferably the following formula:
Si(W)₄ (V)
wherein:
W is an alkoxy group or a glycol ether group.

5. A method according to claim 4, wherein W is an alkyleneglycol, in particular 2-alkoxy ethanol, more in particular 2-butoxy ethanol or W is a dialkyleneglycol ether, in particular dipropyleneglycol monoalkylether, more in particular dipropyleneglycol monomethyl ether.

6. A method according to any of the preceding claims, wherein the multivalent metal salt comprises a cation of a multivalent metal selected from the group consisting of zinc, aluminum, zirconium, chromium, iron, manganese, titanium, calcium, magnesium, copper, and any combinations thereof.

7. A method according to any of the preceding claims, wherein the solvent consists essentially of water, preferably deionized water.

8. A method according to any of the preceding claims, wherein the protective coating composition comprises a silane compound comprising a perfluoropolyether group in an amount of at least 0.01 wt%, at least 0.05 wt%, at least 0.1 wt%, at least 0.3 wt%, at least 0.4 wt%, at least 0.5 wt%, or even at least 0.8 wt%, based on the weight of the overall coating composition.

9. A method according to any of the preceding claims, wherein the protective coating composition comprises a tetra-functional silane in an amount comprised between 0.05 wt% and 10 wt%, between 0.08 wt% and 8 wt%, between 0.1 wt% and 8 wt%, between 0.2 wt% and 6 wt%, between 0.5 wt% and 6 wt%, between 0.6 wt% and 5 wt%, between 0.6 wt% and 4 wt%, between 0.6 wt% and 3.0 wt%, or even between 0.6 wt% and 2.5 wt%, based on the weight of the overall coating composition.

10. A method according to any of the preceding claims, wherein the protective coating composition comprises a multivalent metal salt in an amount comprised between 0.01 wt% and 10 wt%, between 0.03 wt% and 8 wt%, between 0.05 wt% and 6 wt%, between 0.05 wt% and 5 wt%, between 0.1 wt% and 4 wt%, between 0.1 wt% and 3 wt%, between 0.1 wt% and 2 wt%, or even between 0.1 wt% and 1.5 wt%, based on the weight of the overall coating composition.

11. A method according to any of the preceding claims, wherein the chromium surface is a metallic surface having a chromium content of at least 50 wt%, at least 70 wt%, at least 80 wt%, at least 90 wt%, at least 95 wt%, or even at least 98 wt%, based on the weight of the metallic surface.

12. A method according to any of the preceding claims, wherein the oily contamination takes the form of a fingerprint.

13. A coated article comprising a chromium surface and a protective coating layer adjacent to the chromium surface, wherein the protective coating layer comprises a layer of the protective coating composition as described in any of claims 1 to 12 which has been dried and/or cured onto the chromium surface.

14. A coated article according to claim 13, which has a static hexadecane contact angle of more than 40°, more than 45°, more than 50°, more than 55°, more than 60°, more than 65°, more than 70°, or even more than 75°, when measured according to the static hexadecane contact angle measurement method described in the experimental section.

15. Use of a protective coating composition as described in any of claims 1 to 12 for reducing oily contamination from a chromium surface.

## Patentansprüche

1. Verfahren zum Reduzieren von öliger Verunreinigung von einer Chromoberfläche, das die folgenden Schritte umfasst:
a) Bereitstellen einer Chromoberfläche;
b) Auftragen einer Schutzbeschichtungszusammensetzung auf die Chromoberfläche, wodurch eine Schicht der Schutzbeschichtungszusammensetzung angrenzend an die Chromoberfläche gebildet wird; und
c) Trocknen und/oder Aushärten der Schicht der Schutzbeschichtungszusammensetzung, wodurch eine Schutzbeschichtungsschicht angrenzend an die Chromoberfläche gebildet wird;
wobei die Schutzbeschichtungszusammensetzung Folgendes umfasst:
a) eine Silanverbindung, die eine Perfluorpolyethergruppe umfasst;
b) ein tetrafunktionelles Silan;
c) ein mehrwertiges Metallsalz;
d) eine Säure; und
e) ein Lösungsmittel, das Wasser und wahlweise ein organisches Lösungsmittel umfasst.

2. Verfahren nach Anspruch 1, wobei die Silanverbindung, die eine Perfluorpolyethergruppe umfasst, die folgende Formel aufweist:
Rf{-X-[C(R¹)₂Si(Y)₃₋ₓ(R)ₓ]_{y}}_{z} (I)
wobei:
Rf eine Polyfluorpolyethergruppe ist;
X eine zweiwertige oder dreiwertige organische Verknüpfungsgruppe ist;
jedes Y unabhängig Halogen, Alkoxy, Hydroxyl, Acyloxy, Polyalkylenoxy oder Aryloxy ist;
R eine Alkylgruppe mit bis zu 8 Kohlenstoffatomen oder eine Phenylgruppe ist;
jedes R¹ unabhängig Wasserstoff oder ein Alkyl mit bis zu 4 Kohlenstoffatomen ist;
x 0 oder 1 oder 2 ist;
y ein Wert von 1 bis 8 ist; und
z 1 oder 2 ist.

3. Verfahren nach einem der Ansprüche 1 oder 2, wobei die Silanverbindung, die eine Perfluorpolyethergruppe umfasst, die folgende Formel aufweist:
Rf{Q-X'-[Si(Y)₃₋ₓ(R)ₓ]_{y}}_{z} (II)
wobei:
Q eine Bindung, -C(O)-N(R')-, -C(O)-O- oder -SO₂N(R')- ist, wobei R' Wasserstoff oder ein Alkyl mit bis zu 4 Kohlenstoffatomen ist; und
X' eine zweiwertige oder dreiwertige organische Verknüpfungsgruppe ist, die mindestens eines von Alkylen oder Arylalkylen umfasst, die jeweils wahlweise durch mindestens eine funktionelle Gruppe unterbrochen sind, die unabhängig voneinander aus der Gruppe aus Ether, Thioether, Sulfon, Amin, Ester, Amid, Carbamat oder Harnstoff ausgewählt ist.

4. Verfahren nach einem der vorstehenden Ansprüche, wobei das tetrafunktionelle Silan ein tetrafunktionelles Orthosilikat mit vorzugsweise der folgenden Formel ist:
Si(W)₄ (V)
wobei:
W eine Alkoxygruppe oder eine Glykolethergruppe ist.

5. Verfahren nach Anspruch 4, wobei W ein Alkylenglycol, vorzugsweise 2-Alkoxyethanol, mehr bevorzugt 2-Butoxyethanol oder W ein Dialkylenglykolether, vorzugsweise Dipropylenglykolmonoalkylether, mehr bevorzugt Dipropylenglykolmonomethylether ist.

6. Verfahren nach einem der vorstehenden Ansprüche, wobei das mehrwertige Metallsalz ein Kation eines mehrwertigen Metalls umfasst, das aus der Gruppe bestehend aus Zink, Aluminium, Zirkonium, Chrom, Eisen, Mangan, Titan, Calcium, Magnesium, Kupfer und jeglichen Kombinationen davon ausgewählt ist.

7. Verfahren nach einem der vorstehenden Ansprüche, wobei das Lösungsmittel im Wesentlichen aus Wasser, vorzugsweise aus deionisiertem Wasser besteht.

8. Verfahren nach einem der vorstehenden Ansprüche, wobei die Schutzbeschichtungszusammensetzung eine Silanverbindung umfasst, die eine Perfluorpolyethergruppe in einer Menge von mindestens 0,01 Gew.-%, mindestens 0,05 Gew.-%, mindestens 0,1 Gew.-%, mindestens 0,3 Gew.-%, mindestens 0,4 Gew.-%, mindestens 0,5 Gew.-% oder sogar mindestens 0,8 Gew.-%, bezogen auf das Gewicht der gesamten Beschichtungszusammensetzung, umfasst.

9. Verfahren nach einem der vorstehenden Ansprüche, wobei die Schutzbeschichtungszusammensetzung ein tetrafunktionelles Silan in einer Menge zwischen 0,05 Gew.-% und 10 Gew.-%, zwischen 0,08 Gew.-% und 8 Gew.-%, zwischen 0,1 Gew.-% und 8 Gew.-%, zwischen 0,2 Gew.-% und 6 Gew.-%, zwischen 0,5 Gew.-% und 6 Gew.-%, zwischen 0,6 Gew.-% und 5 Gew.-%, zwischen 0,6 Gew.-% und 4 Gew.-%, zwischen 0,6 Gew.-% und 3 Gew.-% oder sogar zwischen 0,6 Gew.-% und 2,5 Gew.-%, bezogen auf das Gewicht der gesamten Beschichtungszusammensetzung, umfasst.

10. Verfahren nach einem der vorstehenden Ansprüche, wobei die Schutzbeschichtungszusammensetzung ein mehrwertiges Metallsalz in einer Menge zwischen 0,01 Gew.-% und 10 Gew.-%, zwischen 0,03 Gew.-% und 8 Gew.-%, zwischen 0,05 Gew.-% und 6 Gew.-%, zwischen 0,05 Gew.-% und 5 Gew.-%, zwischen 0,1 Gew.-% und 4 Gew.-%, zwischen 0,1 Gew.-% und 3 Gew.-%, zwischen 0,1 Gew.-% und 2 Gew.-% oder sogar zwischen 0,1 Gew.-% und 1,5 Gew.-%, bezogen auf das Gewicht der gesamten Beschichtungszusammensetzung, umfasst.

11. Verfahren nach einem der vorstehenden Ansprüche, wobei die Chromoberfläche eine metallische Oberfläche ist, die einen Chromgehalt von mindestens 50 Gew.-%, mindestens 70 Gew.-%, mindestens 80 Gew.-%, mindestens 90 Gew.-%, mindestens 95 Gew.-% oder sogar mindestens 98 Gew.-%, bezogen auf das Gewicht der metallischen Oberfläche, aufweist.

12. Verfahren nach einem der vorstehenden Ansprüche, wobei die ölige Verunreinigung die Form eines Fingerabdrucks aufweist.

13. Beschichteter Gegenstand, der eine Chromoberfläche und eine an die Chromoberfläche angrenzende Schutzbeschichtungsschicht umfasst, wobei die Schutzbeschichtungsschicht eine Schicht der Schutzbeschichtungszusammensetzung, wie in einem der Ansprüche 1 bis 12 beschrieben, umfasst, die auf die Chromoberfläche getrocknet und/oder gehärtet wurde.

14. Beschichteter Gegenstand nach Anspruch 13, der einen statischen Hexadecan-Kontaktwinkel von mehr als 40°, mehr als 45°, mehr als 50°, mehr als 55°, mehr als 60°, mehr als 65°, mehr als 70° oder sogar mehr als 75° aufweist, gemessen gemäß dem im experimentellen Abschnitt beschriebenen statischen Hexadecan-Kontaktwinkelmessverfahren.

15. Verwendung einer Schutzbeschichtungszusammensetzung, wie in einem der Ansprüche 1 bis 12 beschrieben, zum Verringern von öliger Verunreinigung von einer Chromoberfläche.

## Revendications

1. Procédé de réduction de contamination huileuse d'une surface de chrome, lequel comprend les étapes consistant à :
a) fournir une surface de chrome ;
b) appliquer une composition de revêtement sur la surface de chrome, en formant ainsi une couche de la composition de revêtement protecteur adjacente à la surface de chrome ; et
c) sécher et/ou durcir la couche de la composition de revêtement protecteur en formant de ce fait une couche de revêtement protecteur adjacente à la surface de chrome,
dans lequel la composition de revêtement protecteur comprend :
a) un composé silane comprenant un groupe perfluoropolyéther ;
b) un silane tétrafonctionnel ;
c) un sel métallique multivalent ;
d) un acide ; et
e) un solvant comprenant de l'eau et, éventuellement, un solvant organique.

2. Procédé selon la revendication 1, dans lequel le composé silane comprenant un groupe perfluoropolyéther a la formule suivante :
Rf{-X-[C(R¹)₂Si(Y)₃₋ₓ(R)ₓ]_{y}}_{z} (I)
dans lequel :
Rf représente un groupe polyfluoropolyéther ;
X représente un groupe de liaison organique divalent ou trivalent ;
chaque Y représente indépendamment un halogène, alcoxy, hydroxyle, acyloxy, polyalkylèneoxy ou aryloxy ;
R représente un groupe alkyle ayant jusqu'à 8 atomes de carbone ou un groupe phényle ;
chaque R¹ est indépendamment un hydrogène ou un alkyle ayant jusqu'à 4 atomes de carbone ;
x vaut 0 ou 1 ou 2 ;
y a une valeur de 1 à 8 ; et
z vaut 1 ou 2.

3. Procédé selon l'une quelconque des revendications 1 ou 2, dans lequel le composé silane comprenant un groupe perfluoropolyéther a la formule suivante :
Rf{Q-X'-[Si(Y)₃₋ₓ(R)ₓ]_{y}}_{z} (II)
dans lequel :
Q est une liaison, -C(O)-N(R')-, -C(O)-O-, ou -SO₂N(R')-, dans lequel R' est un hydrogène ou un alkyle ayant jusqu'à 4 atomes de carbone ; et
X' est un groupe de liaison organique divalent ou trivalent comprenant au moins l'un parmi un alkylène ou un arylalkylène, dont chacun est éventuellement interrompu par au moins un groupe fonctionnel qui est indépendamment choisi dans le groupe d'éther, thioéther, sulfone, aminé, ester, amide, carbamate ou urée.

4. Procédé selon l'une quelconque des revendications précédentes, dans lequel le silane tétrafonctionnel est un orthosilicate tétrafonctionnel ayant de préférence la formule suivante :
Si(W)₄ (V)
dans lequel :
W est un groupe alcoxy ou un groupe éther de glycol.

5. Procédé selon la revendication 4, dans lequel W est un alkylène-glycol, en particulier du 2-alcoxy éthanol, plus particulièrement du 2-butoxy éthanol ou W est un éther de dialkylène-glycol, en particulier un éther monoalkylique de dipropylène-glycol, plus particulièrement de l'éther monométhylique de dipropylène-glycol.

6. Procédé selon l'une quelconque des revendications précédentes, dans lequel le sel métallique multivalent comprend un cation d'un métal multivalent choisi dans le groupe constitué de zinc, aluminium, zirconium, chrome, fer, manganèse, titane, calcium, magnésium, cuivre, et n'importe quelle combinaison de ceux-ci.

7. Procédé selon l'une quelconque des revendications précédentes, dans lequel le solvant est constitué sensiblement d'eau, de préférence d'eau désionisée.

8. Procédé selon l'une quelconque des revendications précédentes, dans lequel la composition de revêtement protecteur comprend un composé silane comprenant un groupe perfluoropolyéther en une quantité d'au moins 0,01 % en poids, au moins 0,05 % en poids, au moins 0,1 % en poids, au moins 0,3 % en poids, au moins 0,4 % en poids, au moins 0,5 % en poids, ou même au moins 0,8 % en poids, sur la base du poids de la composition de revêtement globale.

9. Procédé selon l'une quelconque des revendications précédentes, dans lequel la composition de revêtement protecteur comprend un silane tétrafonctionnel en une quantité comprise entre 0,05 % en poids et 10 % en poids, entre 0,08 % en poids et 8 % en poids, entre 0,1 % en poids et 8 % en poids, entre 0,2 % en poids et 6 % en poids, entre 0,5 % en poids et 6 % en poids, entre 0,6 % en poids et 5 % en poids, entre 0,6 % en poids et 4 % en poids, entre 0,6 % en poids et 3,0 % en poids, ou même entre 0,6 % en poids et 2,5 % en poids, sur la base du poids de la composition de revêtement globale.

10. Procédé selon l'une quelconque des revendications précédentes, dans lequel la composition de revêtement protecteur comprend un sel métallique multivalent en une quantité comprise entre 0,01 % en poids et 10 % en poids, entre 0,03 % en poids et 8 % en poids, entre 0,05 % en poids et 6 % en poids, entre 0,05 % en poids et 5 % en poids, entre 0,1 % en poids et 4 % en poids, entre 0,1 % en poids et 3 % en poids, entre 0,1 % en poids et 2 % en poids, ou même entre 0,1 % en poids et 1,5 % en poids, sur la base du poids de la composition de revêtement globale.

11. Procédé selon l'une quelconque des revendications précédentes, dans lequel la surface de chrome est une surface métallique ayant une teneur en chrome d'au moins 50 % en poids, au moins 70 % en poids, au moins 80 % en poids, au moins 90 % en poids, au moins 95 % en poids, ou même au moins 98 % en poids, sur la base du poids de la surface métallique.

12. Procédé selon l'une quelconque des revendications précédentes, dans lequel la contamination huileuse prend la forme d'une empreinte digitale.

13. Article revêtu comprenant une surface de chrome et une couche de revêtement protecteur adjacente à la surface de chrome, dans lequel la couche de revêtement protecteur comprend une couche de la composition de revêtement protecteur telle que décrite dans l'une quelconque des revendications 1 à 12 qui a été séchée et/ou durcie sur la surface de chrome.

14. Article revêtu selon la revendication 13, qui a un angle de contact statique avec l'hexadécane de plus de 40°, plus de 45°, plus de 50°, plus de 55°, plus de 60°, plus de 65°, plus de 70°, ou même plus de 75°, lorsqu'on mesure selon le procédé de mesure d'angle de contact statique avec l'hexadécane décrit dans la section expérimentale.

15. Utilisation d'une composition de revêtement protecteur telle que décrite dans l'une quelconque des revendications 1 à 12 pour réduire une contamination huileuse d'une surface de chrome.
